Europäisches Patentamt

European Patent Office

Office européen des brevets

(11) Numéro de publication: **0 297 983 B1**

# FASCICULE DE BREVET EUROPEEN

(45) Date de publication de fascicule du brevet: **27.01.93** (51) Int. Cl.⁵: **G01N 29/00**

(21) Numéro de dépôt: **88401679.1**

(22) Date de dépôt: **30.06.88**

(54) **Procédé et dispositif de mesure des paramètres de biréfringence acoustique d'un matériau par mesure de temps.**

(30) Priorité: **02.07.87 FR 8709364**

(43) Date de publication de la demande:
**04.01.89 Bulletin 89/01**

(45) Mention de la délivrance du brevet:
**27.01.93 Bulletin 93/04**

(84) Etats contractants désignés:
**CH DE GB IT LI NL SE**

(56) Documents cités:
**FR-A- 2 295 633**
**FR-A- 2 582 205**
**GB-A- 2 069 697**
**GB-A- 2 117 906**
**US-A- 4 080 836**

**ULTRASONICS, vol. 24, no. 5, septembre 1986, pages 281-288, Butterworth & Co. (Publishers) Ltd, Guildford, Surrey, GB; A.V. CLARK et al.: "Characterization of residual stress and texture in cast steel railroad wheels"**

(73) Titulaire: **ETAT-FRANCAIS représenté par le DELEGUE GENERAL POUR L'ARMEMENT (DPAG)**
**Bureau des Brevets et Inventions de la Délégation Générale pour l'Armement 26, Boulevard Victor**
**F-75996 Paris Armées(FR)**

(72) Inventeur: **Zarembowitch, André**
**19, rue de la Butte aux Cailles**
**F-75013 Paris(FR)**
Inventeur: **Khalifa, Albert**
**47, Avenue Charles De Gaulle**
**F-91830 Coudray-Montceaux(FR)**

**Description**

L'invention concerne un procédé et un dispositif de mesure des paramètres de biréfringence acoustique d'un matériau par mesure de temps.

La méthode d'analyse de contraintes par photo-élasticimétrie peut être transposée aux solides, absorbant des rayonnements électromagnétiques du spectre visible, dans le cadre de la biréfringence acoustique des solides, la méthode correspondante d'analyse étant dénommée acousto-élasticimétrie.

Pour un corps solide isotrope de forme parallélépipédique soumis à une contrainte uni-axiale uniforme exercée perpendiculairement à l'une de ses faces selon une direction Ox, la vitesse des ondes élastiques transversales se propageant suivant une direction Oz perpendiculaire à Ox est différente selon que la direction de polarisation du vecteur vibration d'onde élastique est parallèle ou, au contraire perpendiculaire à Ox.

Cette différence de vitesse de propagation donne lieu à des phénomènes de biréfringence acoustique provoquée désignée encore sous le nom d'effet Pockels acoustique. De même les milieux naturellement anisotropes peuvent, pour certaines directions de propagation , donner lieu à un phénomène de biréfringence acoustique naturelle. En outre, un milieu naturellement isotrope peut, après soumission à de fortes contraintes, conserver une biréfringence rémanente. C'est par exemple le cas de certains aciers après traitement par laminage.

L'ensemble de ces phénomènes a fait l'objet de travaux importants dans le domaine de l'acousto-élasticimétrie afin de déterminer les paramètres de biréfringence acoustique de matériau, et à partir de ceux-ci, certaines de leurs caractéristiques mécaniques.

De manière générale, les systèmes polarimètres acoustiques mis en oeuvre précédemment permettent la détermination des paramètres de biréfringence acoustique à partir, soit de transducteurs polariseurs et analyseurs tournants, soit à partir de transducteurs polariseurs et analyseurs fixes, permettant d'engendrer une onde acoustique à polarisation tournante. De tels systèmes polarimètres ont été décrits respectivement par les demandes de brevet français FR-A-2 474 696 et FR-A-2 524 645.

Ces systèmes polarimètres se prêtent mal à une exploitation industrielle en raison, d'une part, de l'utilisation, nécessaire, dans le cas de transducteurs tournants, d'un liant liquide lequel présente un temps de relaxation non négligeable, et, d'autre part, de la mise en oeuvre de circuits électroniques de compensation des déphasages générateurs de l'onde acoustique à polarisation tournante de structure très complexe.

La présente invention a pour but de remédier aux inconvénients précités par la mise en oeuvre d'un procédé et d'un dispositif de mesure des paramètres de biréfringence acoustique d'un matériau à analyser dans lesquels les seules mesures effectuées sont des mesures de temps ou d'écart de temps.

Un autre objet de la présente invention est la mise en oeuvre d'un procédé et d'un dispositif de mesure des paramètres de biréfringence acoustique d'un matériau à analyser dans lesquels les transducteurs d'émission-réception d'une onde acoustique d'analyse étant fixes, ceux-ci sont excités, de façon indépendante, afin d'engendrer de simples impulsions ou trains d'impulsions d'onde acoustique dont les temps de propagation après une ou plusieurs réflexions sont mesurés.

Un autre objet de la présente invention est la mise en oeuvre d'un procédé et d'un dispositif de mesure des paramètres de biréfringence acoustique d'un matériau à analyser dans lequel la précision des mesures peut être augmentée par la multiplication des mesures d'écart de temps pour différentes valeurs de fréquence.

Un autre objet de la présente invention est enfin la mise en oeuvre d'un procédé et d'un dispositif de mesure des paramètres de biréfringence acoustique d'un matériau à analyser, dans lequel la précision des mesures peut également être augmentée par la multiplication des mesures d'écart de temps, à une fréquence donnée de l'onde acoustique d'analyse, dans des directions de référence différentes liées à un repère arbitraire de la surface du matériau à analyser.

Le procédé pour déterminer les paramètres de biréfringence acoustique $\theta_i$ et $\phi_i$ d'une lame à faces localement parallèles d'épaisseur e d'un matériau à étudier, par rapport à au moins deux directions de référence données définies par rapport à un repère $(Ox_i,Oy_i)$ défini par deux directions arbitraires, le paramètre $\theta_i$ étant défini comme l'angle de décalage des axes lent L et rapide R de la lame par rapport au repère $(Ox_i,Oy_i)$ et le paramètre $\phi_i$ étant défini comme l'angle de déphasage entre les ondes résultantes se propageant suivant les axes rapide R et lent L dans une épaisseur de matériau e est caractérisé en ce qu'il consiste à engendrer une onde acoustique transversale, polarisée rectilignement selon une des directions de référence et modulée en impulsions et à la diriger vers la face d'entrée de la lame à étudier, en soumettant ainsi ladite face d'entrée de la lame à des impulsions incidentes, à détecter et à mesurer, relativement à un instant de référence par rapport auxdites impulsions, les temps de retard, à la réception en réflexion, des impulsions d'écho engendrées par lesdites impulsions incidentes dans les deux directions de référence précitées, à répéter les étapes précédentes pour au moins une deuxième direction de référence, distincte de la première, l'onde acoustique transversale étant polarisée selon ladite deuxième direction de référence, à répéter les étapes précédentes pour une pluralité de valeurs distinctes de la fréquence de l'onde acoustique en à obtenir ainsi un réseau de valeurs des temps de retard, à la réception en réflexion, des impulsions d'écho engendrées par lesdites impulsions incidentes pour différentes valeurs de la fréquence d'émission de l'onde acoustique incidente, à déterminer les paramètres de biréfringence $\theta_i$ et $\phi_i$ par combinaison linéaire des équations liant les paramètres de biréfringence $\theta_i$ et $\phi_i$ pour les différentes valeurs de fréquence d'émission.

Le dispositif pour déterminer les paramètres de biréfringence acoustique $\theta_i$ et $\phi_i$ d'une lame à faces parallèles d'un matériau à étudier objet de l'invention est caractérisé en ce qu'il comprend des moyens générateurs d'une onde acoustique transversale à fréquence variable polarisée rectilignement selon une des directions de référence et modulée en impulsions, des moyens de détection et de mesure relativement à l'instant de référence par rapport auxdites impulsions, des temps de retard, à la réception en réflexion, des impulsions d'écho engendrées par lesdites impulsions incidentes dans deux directions de référence définies par deux directions arbitraires, des moyens de calcul permettant d'établir la valeur des paramètres de biréfringence acoustique par résolution d'une combinaison des équations liant les paramètres de biréfringence aux différentes valeurs de fréquence d'émission.

Le procédé et le dispositif pour déterminer les paramètres de biréfringence acoustique d'une lame à faces localement parallèles d'épaisseur donnée d'un matériau à étudier, trouvent application dans les laboratoires de recherche appliquée de physique du solide ou de résistance des matériaux, ainsi que bien entendu, dans les installations industrielles de fabrication de profilés, de matériau en plaque, en bande par exemple.

Le procédé et le dispositif de mesure des paramètres de biréfringence acoustique d'un matériau par mesure de temps, conformément à l'objet de la présente invention seront mieux compris à la lecture de la description et à l'observation des dessins ci-après dans lesquels:

- la figure 1 représente en a, b, c, d, différents schémas illustratifs du procédé de mesure des paramètres de biréfringence acoustique d'un matériau par mesure de temps, conformément à l'invention,
- la figure 2a représente un mode de réalisation particulier de mise en oeuvre particulièrement avantageux du procédé objet de l'invention,
- la figure 2b représente des formes d'onde d'impulsions d'écho analysées en vue de la mise en oeuvre du procédé objet de l'invention, dans un cas particulier correspondant à l'absence de lame à faces parallèles, afin de permettre une définition de certains paramètres du procédé objet de l'invention,
- la figure 2c représente un schéma relatif aux formes d'onde analysées pour la mise en oeuvre du procédé objet de l'invention conformément au mode de réalisation de la figure 2a, les formes d'onde correspondant aux impulsions d'écho reçues en présence d'une lame à faces parallèles à analyser,
- la figure 3 représente un schéma synoptique du dispositif pour déterminer les paramètres de biréfringence acoustique d'une lame à faces parallèles d'un matériau à analyser conformément au procédé objet de l'invention,
- la figure 4 représente un organigramme de conduite du procédé de l'invention.

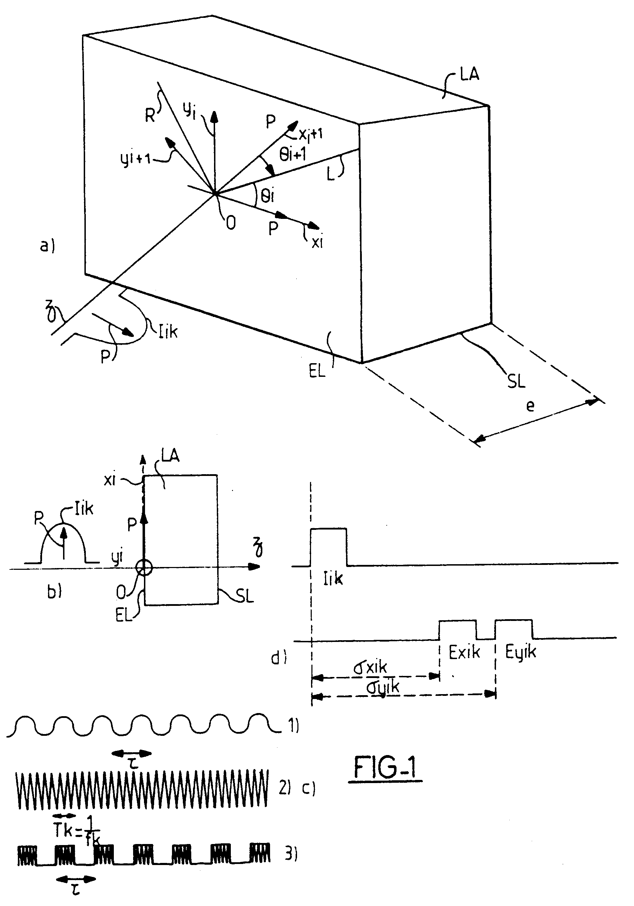

Le procédé de mesure des paramètres de biréfringence acoustique d'un matériau par mesure de temps conforme à l'objet de l'invention, sera tout d'abord décrit en liaison avec la figure 1.

Pour la mise en oeuvre du procédé pour déterminer les paramètres de biréfringence acoustique $\theta_i$ et $\phi_i$ d'une lame à faces localement parallèles d'un matériau à analyser, une lame LA de ce matériau présentant une épaisseur e est prise en considération. La lame LA présente, de manière avantageuse, une face dite face d'entrée notée EL, et une face dite de sortie notée SL. Sur l'une des faces précitées, on définit au moins deux directions de référence notées $Ox_i$, $Oy_i$, les deux directions de référence $Ox_i$ et $Oy_i$ étant perpendiculaires chacune à chacune, mais orientées de façon arbitraire.

Le paramètre de biréfringence acoustique $\theta_i$ est défini comme l'angle de décalage des axes lents L et rapides R de la lame LA par rapport au repère $Ox_i$, $Oy_i$. Le paramètre $\phi_i$ est défini comme l'angle de déphasage entre les ondes résultants se propageant suivant les axes rapide R et lent L dans l'épaisseur $\underline{e}$ de matériau de la lame LA considérée.

Ainsi qu'on l'a représenté de manière schématique en figure 1a, le procédé, objet de l'invention, consiste à engendrer une onde acoustique transversale polarisée rectilignement selon une des directions de référence $Ox_i$, $Oy_i$. Sur la figure 1a, la direction de polarisation de l'onde acoustique transversale est notée P sur la face d'entrée EL de la lame à faces parallèles LA. En outre, conformément au procédé objet de l'invention, l'onde acoustique transversale est modulée en impulsions, l'impulsion de l'onde acoustique transversale précitée, étant représentée de manière schématique par l'enveloppe de celle-ci sur un axe Oz sensiblement orthogonal à la face d'entrée EL de la lame LA. Bien entendu, l'onde acoustique modulée en impulsions est dirigée vers la face d'entrée EL de la lame LA à étudier, de façon à soumettre cette face d'entrée à des impulsions incidentes, ces impulsions incidentes étant notées $I_{ik}$ sur la figure 1a.

En outre, conformément au procédé objet de l'invention, celui-ci consiste ensuite à détecter et à mesurer, relativement à un instant de référence par rapport aux impulsions incidentes $I_{ik}$précitées, les temps de retard, à la réception en réflexion, des impulsions d'écho engendrées par les impulsions incidentes dans les directions de référence $Ox_i$ et $Oy_i$ précitées.

Ainsi qu'on l'a représenté en outre de manière schématique en figure 1a, les étapes précédentes consistant à engendrer une onde acoustique transversale modulée en impulsions, puis à détecter et à mesurer les temps de retard à la réception en réflexion, des impulsions d'écho engendrées par ces impulsions incidentes, sont répétées pour au moins une deuxième direction de référence, direction notée $Ox_{i+1}$, $Oy_{i+1}$, distincte de la première direction $Ox_i$, $Oy_i$. Bien entendu, l'onde acoustique transversale est alors polarisée selon la deuxième direction de référence $Ox_{i+1}$ ou $Oy_{i+1}$.

Conformément à un aspect avantageux du procédé objet de l'invention, les étapes précédentes peuvent alors être répétées pour une pluralité de valeurs distinctes de la fréquence de l'onde acoustique, valeurs distinctes notées $f_k$, de façon à obtenir un ensemble de valeurs des temps de retard à la réception en réflexion des impulsions d'écho engendrées par les impulsions incidentes pour différentes valeurs de la fréquence d'émission de l'onde acoustique incidente.

Sur la figure 1, au point 1b et 1d, on a représenté pour une direction de référence $Ox_i$, $Oy_i$, considérée, la lame à faces parallèles LA soumise aux impulsions incidentes $I_{ik}$, ces impulsions incidentes étant représentées de manière plus détaillée en figure 1c, sous forme de trains d'impulsions ainsi qu'il sera décrit de façon plus détaillée ultérieurement dans la description.

Sur la figure 1d, on a représenté, en partie supérieure l'impulsion incidente $I_{ik}$sur la face d'entrée EL de la lame LA, et sur la partie inférieure, les impulsions d'écho détectées dans la direction de référence $Ox_i$ et dans la direction de référence $Oy_i$ . Ces impulsions d'écho détectées sur la face d'entrée EL de la lame LA après réflexion sur la face de sortie SL, sont notées respectivement $Ex_{ik}$ pour l'impulsion d'écho détectée dans la direction $Ox_i$, et respectivement $Ey_{ik}$ pour l'impulsion d'écho détectée dans la direction $Oy_i$ . On notera bien entendu que le deuxième indice k des impulsions d'écho correspond aux valeurs instantanées de la fréquence $f_k$ de l'onde acoustique. Sur la même figure 1d, les retards des impulsions d'écho $Ex_{ik}$ et $Ey_{ik}$, par rapport à l'impulsion incidente $I_{ik}$ sont respectivement notées $\sigma x_{ik}$ et $\sigma y_{ik}$.

Sur la figure 1c, on a également représenté les formes d'onde des impulsions incidentes émises sous forme de trains d'impulsions, la forme d'onde en 1 représentant la forme d'onde de modulation des impulsions incidentes de période $\tau$, la forme d'onde en 2 représentant l'onde acoustique de fréquence $f_k$ et la forme d'onde 3 représentant l'onde acoustique de fréquence fk modulée par la forme d'onde 1 de période $\tau$.

Les paramètres de biréfringence $\theta_i$ et $\phi_i$ relatifs à la lame de matériau LA, peuvent alors être déterminés par résolution d'une combinaison des équations liant les paramètres de biréfringence $\theta_i$ et $\phi_i$ pour les différentes valeurs de fréquence d'émission $f_k$ précitées, ainsi qu'il sera décrit ci-après de manière plus détaillée dans la description.

Les équations qui décrivent les échos tels que représentés en figure 1d, échos issus du matériau ou plus précisément de la lame LA, dans le cas général où l'onde acoustique présente une direction de polarisation $Px_i$, excite dans la lame LA une onde notée $Ux_{ik}$ et où une onde acoustique polarisée dans la direction $Py_i$ excite une onde acoustique notée $Uy_{ik}$, l'indice k étant représentatif de la valeur de la fréquence $f_k$ de l'onde acoustique considérée. Les échos Exik et $Ey_{ik}$ s'expriment sous forme matricielle par la relation :

$$(1)$$

$$
\begin{bmatrix} Ex_{ik} \\ Ey_{ik} \end{bmatrix} = \begin{bmatrix} \cos\theta_i & -\sin\theta_i \\ \sin\theta_i & \cos\theta_i \end{bmatrix} \begin{bmatrix} 1 & 0 \\ 0 & \underbrace{e^{-2j\phi_i}}_{\exp(-2j\phi_i)} \end{bmatrix} \begin{bmatrix} \cos\theta_i & \sin\theta_i \\ -\sin\theta_i & \cos\theta_i \end{bmatrix} \begin{bmatrix} Ux_{ik} \\ Uy_{ik} \end{bmatrix}
$$

Cette relation s'exprime sous forme développée selon la relation :

$$( 2 )$$

$$\begin{bmatrix} Ex_{ik} \\ EY_{ik} \end{bmatrix} = \begin{bmatrix} Ux_{ik}(\cos^2\theta_i + \sin^2\theta_i\exp(-2j\phi_i)) + Uy_{ik}\sin\theta_i\cos\theta_i(1-\exp(-2j\phi_i)) \\ Ux_{ik}(\sin\theta_i\cos\theta_i(1 - \exp(-2j\phi_i)) + Uy_{ik}(\sin^2\theta_i + \cos^2\theta_i\exp(-2j\phi_i)) \end{bmatrix}$$

A supposer que l'onde acoustique soit tout d'abord polarisée dans la direction $Ox_i$, une onde acoustique de fréquence $f_k$ et de pulsation correspondante $\omega_k$ permet de détecter dans la direction de référence $Ox_i$, respectivement $Oy_i$ les échos $Ex_{ik}$ et $Ey_{ik}$ correspondants donnés sous la forme matricielle ci-après :

$$( 3 )$$

$$\begin{bmatrix} Ex_{ik} \\ EY_{ik} \end{bmatrix} = \begin{bmatrix} \cos^2\theta_i + \sin^2\theta_i \exp (-2j\phi_i) \\ \sin\theta_i \cos\theta_i (1 - \exp (-2j\phi_i) \end{bmatrix} \exp(j\omega_k t)$$

En supposant maintenant que l'onde acoustique est polarisée dans la direction de référence $Oy_i$, les échos détectés dans les directions de référence $Ox_i$, respectivement $Oy_i$, échos notés $Ex_{ik}$, respectivement $Ey_{ik}$, sont donnés par la relation :

$$( 4 )$$

$$\begin{bmatrix} Ex_{ik} \\ EY_{ik} \end{bmatrix} = \begin{bmatrix} \sin\theta_i \cos\theta_i (1 - \exp(-2j\phi_i)) \\ \sin^2\theta_i + \cos^2\theta_i \exp (-2j\phi_i) \end{bmatrix} \exp(j\omega_k t)$$

Dans les relations 3 et 4 le terme de pulsation de la forme $\exp(j\omega kt)$ peut être supprimé.

En posant les trois égalités suivantes

(5)    $A = \sin^2\theta_i + \cos^2\theta_i \exp(-2j\phi_1)$
(6)    $B = \cos^2\theta_i + \sin^2\theta_i \exp(-2j\phi_1)$
(7)    $C = \sin\theta_i \cos\theta_i (1 - \exp(-2j\phi_1))$

Les expressions A, B et C peuvent s'écrire sous la forme :

(8)    $A = M_A \exp ( j \mu_A)$
(9)    $B = M_A \exp ( j \mu_B)$
(10)    $C = M_A \exp ( j \mu_C)$

Dans les relations 8, 9 et 10, les modules des expressions A, B et C notés respectivement $M_A$, $M_B$ et $M_C$ vérifient les relations :

(11)    $M^2 = M_A^2 = M_B^2 = 1 - \sin^2 2\theta_i \sin^2\theta_i$
(12)    $M' = M_C = | \sin 2\theta_i \sin \phi_i|$

En effectuant le changement de variable correspondant à la relation 13 ci-après :

(13) $\quad \text{tg } \lambda = \cos^{2\theta}{}_i \text{ tg } \phi_i$

on obtient les relations 14, 15 et 16 suivantes liant les paramètres de biréfringence $\theta_i$ et $\phi_i$ pour la direction de référence $Ox_i$ et $Oy_i$, dans lesquels les constantes $k_A$, $k_B$ et $k_C$ sont des entiers :

(14) $\quad \mu_A = \lambda -\phi_i + k_A \pi$

(15) $\quad \mu_B = -\lambda-\phi_i + k_B \pi$

(16) $\quad \mu_C = \pi/2 - \phi_i + k_C\pi$

Une combinaison linéaire des relations 14, 15 et 16 précédentes permet d'obtenir les relations 17, 18, 19 suivantes :

(17) $\quad \text{tg } (\mu_A - \mu_B ) = \text{tg } 2 \lambda$

(18) $\quad \text{tg } (\mu_A + \mu_B) = -\text{tg } 2 \phi_i$

(19) $\quad \text{tg } \mu_C = \text{tg } ( \pi/2- \phi_i)$

Les équations précitées ou relations décrivent de manière théorique les échos qui ont traversé la lame LA de matériau. On rappellera que les échos considérés $Ex_{ik}$ et $Ey_{ik}$, sont respectivement notés A, B, C, avec pour convention, la convention selon laquelle:
- A est l'écho reçu ou détecté dans la direction de référence $Ox_i$, à partir d'une onde incidente polarisée dans la direction $Ox_i$,
- B est l'écho reçu ou détecté dans la direction $Oy_i$ issue polarisé dans la direction $Oy_i$,
- C est soit l'écho reçu ou détecté dans la direction $Oy_i$ issu d'une onde polarisée dans la direction de référence $Ox_i$, soit l'écho reçu ou détecté dans la direction de référence $Ox_i$ issue d'une onde polarisée par la direction de référence $Oy_i$.

Une première méthode de détermination de $\phi_i$ consiste à exploiter les modules précédemment définis selon les relations 11 et 12. En effet, en supposant que sinus $\phi_i$ et sinus $2\theta_i$ sont différents de 0, du fait que $\phi_i$ est proportionnel à $\omega_k$, en faisant varier la fréquence $f_k$ de l'onde acoustique incidente, le module des échos précités décrit une sinusoïde pour laquelle il est possible de calculer les caractéristiques. Avec cette méthode, il est possible de donner une valeur approximative du déphasage et de lever ainsi l'indétermination de $\pi$ apparaissant fréquemment dans la mesure de déphasage.

Les méthodes utilisant les modules ne peuvent être qu'approximatives dans la mesure où la propagation des échos dans la chaîne acoustique réelle subit des distorsions non négligeables dues aux effets transitoires des fronts montants et descendants des échos. Ces effets provoquent des variations du module à l'intérieur de l'écho. D'autre part, les réponses en fréquence du transducteur ne sont pas constantes, ce qui provoque une variation globale des modules en fonction de la fréquence.

L'utilisation des équations de phase 17, 18 et 19 est équivalente, seule l'exploitation de la relation 17 étant immédiate dans la mesure où celle-ci utilise des phases relatives. Le principe de résolution est alors le suivant : la mesure de la différence de phase des échos A et B à la pulsation $\omega_k$ s'écrit :

(20) $\quad 2\lambda_k = \phi_A - \phi_B = \omega_k \Delta t.$

Dans cette relation, $\Delta t$ représente la différence des temps de transit apparents entre les échos A et B, $t_A$- $t_B$, $t_A$ représentant le temps de transit de l'écho A et $t_B$, le temps de transit de l'écho B. Les échos vérifient donc les équations du type 21 :

(21) $\quad \text{tg } \lambda_k = \text{tg } \omega_k \sigma_k$ avec $\sigma_k = \frac{\Delta t}{2}$

Ainsi, le paramètre de biréfringence $\theta_i$ vérifie la relation 22 :

$$(22) \quad \cos\ 2\theta_i = \frac{\text{tg}\lambda_k}{\text{tg}\omega_k\sigma_k} = \frac{\text{tg}\lambda_{k+p}}{\text{tg}\omega_{k+p}\ \sigma_{k+p}}$$

Dans la relation 22 précitée, les valeurs $\lambda_k$, $\omega_k$ et $\sigma_k$ représentent respectivement les déphasages dans les directions de référence $Ox_i$ et $Oy_i$, à la fréquence $f_k$ de l'onde acoustique pour une pulsation $\omega_k$ de celle-ci, $\sigma_k$ représentant le demi-temps de transit correspondant pour les échos A et B précédemment définis. Ainsi, en modifiant ou en faisant varier la fréquence $f_k$ de l'onde acoustique ou sa pulsation correspondante $\omega_k$ pour des valeurs $f_k,\omega_k$ et $f_{k+p}$, $\omega_{k+p}$, le temps de transit $\sigma_k$ et l'orientation $\theta_i$ restent constants.

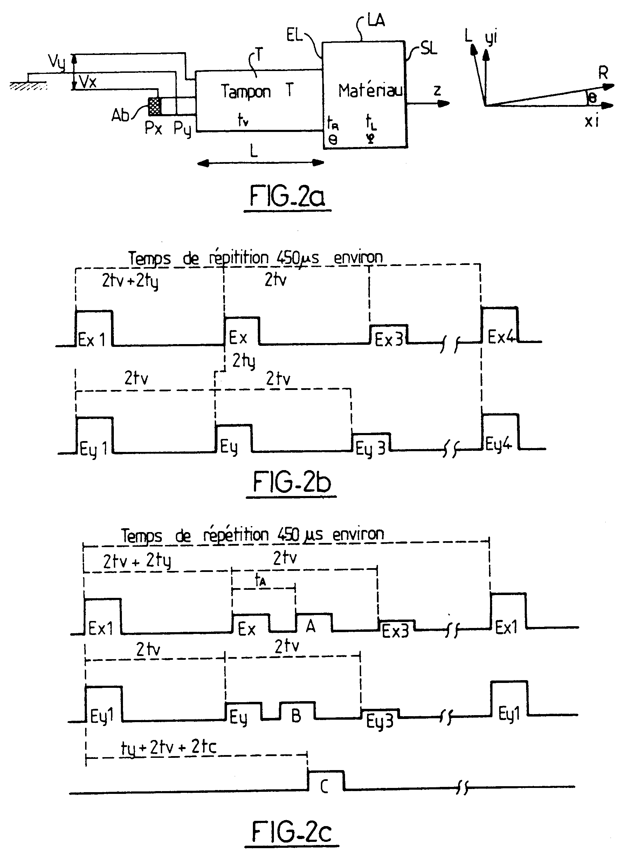

Le procédé pour déterminer les paramètres de biréfringence acoustique $\theta$ et $\phi$ d'une lame à faces localement parallèles d'épaisseur e d'un matériau à étudier précédemment décrit dans le cas le plus général sera maintenant décrit dans un mode de réalisation non limitatif particuliérement avantageux en liaison avec les figures 2a, 2b, 2c.

Dans le mode de réalisation du procédé objet de l'invention présentement décrit, un agencement particulier du dispositif permettant la mise en oeuvre du procédé, tel que représenté en figure 2a, permet d'effectuer, physiquement, une discrimination des différentes impulsions engendrées par réflexion sur les faces d'entrée EL et de sortie SL de la lame LA à étudier, ainsi qu'il sera décrit ci-après.

Selon le mode de réalisation représenté en figure 2a, le dispositif permettant la mise en oeuvre du procédé conforme à l'objet de l'invention est un polarimètre dit à sonde fixe, fonctionnant en réflexion, c'est-à-dire que le même organe est utilisé pour émettre et pour recevoir les impulsions constituant impulsion incidente et impulsion d'écho.

On peut noter que le polarimètre à sonde fixe utilisé ici est un polarimètre normalement disponible dans le commerce, polarimètre dit SSR distribué par la société THOMSON. Les éléments essentiels de ce polarimètre seront cependant décrits en détail, de manière à faciliter la compréhension de la mise en oeuvre du procédé objet de l'invention.

Conformément à la figure 2a précitée, le dispositif permettant la mise en oeuvre du procédé objet de l'invention comporte au moins deux transducteurs notés Px et Py, dont les polarisations transversales sont décalées à 90°. Ces directions de polarisations transversales définissent ainsi le repère $Ox_i$, $Oy_i$, $Oz$, précédemment décrit, la direction $Oz$ étant la direction de propagation des ondes acoustiques. Les deux transducteurs Px et Py sont montés de préférence, ainsi que représenté en figure 2a, une électrode de masse étant intercalée entre le transducteur Px et le transducteur Py. Un absorbant acoustique est collé sur la face du transducteur Px opposée au transducteur Py. Une électrode de commande est intercalée entre l'absorbant précité noté Ab, et le transducteur Px. L'excitation des transducteurs Px et Py est effectuée au moyen de signaux d'excitation de fréquence appropriée notés Vx et Vy. Les éléments précédemment décrits forment ce que l'on a désigné précédemment par la sonde.

Ainsi qu'on le remarquera en outre en figure 2a, et ce, afin de réaliser la discrimination physique des impulsions précédemment mentionnées, un tampon de verre, noté T, acoustiquement isotrope, de longueur L, est intercalé entre le transducteur Py et la lame LA de matériau à analyser. Dans le tampon de verre T, une onde ultra-sonore de polarisation transversale, direction de polarisation correspondant aux directions définies par les transducteurs Px ou Py, présente une vitesse notée Vv, le temps de transit de cette onde ultra-sonore dans le tampon de verre T étant noté $t_v = L/Vv$.

Sur la face libre du tampon de verre T, face opposée au transducteur Py, la lame LA de matériau à analyser est accollée. La sonde précédemment décrite permet de définir les directions de référence $Ox_i$ et $Oy_i$ telles que représentées en figure 2a, par rapport à un axe dit rapide R, qui autorise la propagation d'une onde de polarisation transversale, dite onde rapide à la vitesse notée $V_R$. De la même manière, la direction de référence $Oy_i$ permet de définir un axe dit lent L orthogonal à R, lequel autorise la propagation d'une onde de polarisation transversale dite onde lente à la vitesse de propagation $V_L$.

Deux ondes de fréquence $f_k$ correspondant à une pulsation $\omega_k$ émise en même temps, l'une selon une direction de polarisation ramenée à la direction de l'axe rapide R, l'autre polarisée selon une direction ramenée de la direction de polarisation selon l'axe lent L, se propageant dans une épaisseur de matériau e sont déphasées d'une phase $\phi_i$ telle que :

$$(23) \qquad \phi_i = \omega_k e \left( \frac{1}{V_L} - \frac{1}{V_R} \right) = \omega_k \left( t_L - t_R \right) = \omega_k \sigma_k$$

Dans la relation 23 précitée, $t_R$ et $t_L$ sont les temps de transit selon l'axe rapide et lent respectivement de l'onde acoustique dans le matériau de la lame LA à analyser. Par définition, le paramètre $\sigma_k$ représentatif de la différence entre $t_L$ et $t_R$ et le paramètre de mesure recherché permettent de déterminer le paramètre de biréfringence $\phi_i$ recherché.

Une description plus détaillée des échos reçus par les transducteurs Px et Py, conformément au

EP 0 297 983 B1

procédé objet de l'invention, dans le montage représenté en figure 2a, sera donnée en liaison avec les figures 2b et 2c.

Les tensions d'excitation Vx et Vy sont des tensions sinusoïdales modulées en impulsion, les tensions Vx et Vy pouvant correspondre ainsi aux signaux représentés en figure 1, particulièrement en figure 1c au point 3). La fréquence porteuse des signaux d'excitation fréquence $f_k$ est réglable dans la bande passante des transducteurs, soit sensiblement entre 1,5 et 3 MHz. Les impulsions sont des impulsions sensiblement rectangulaires de durée $\tau/2$ égale à 6 ou 7 microsecondes et dont le temps de montée est inférieur à 1,5 microseconde. La fréquence de récurrence des impulsions de modulation est de 2,2 KHz et le train d'ondes émis est émis sur une durée d'une quinzaine de périodes sensiblement. Les niveaux des tensions émises sont compris entre 5 et 20 volts crête à crête, la mesure étant effectuée, les polariseurs Px et Py étant déconnectés. Afin de donner une explication plus complète du phénomène de propagation des impulsions engendrées dans la lame à étudier LA et dans le tampon T, une première description des impulsions engendrées dans le tampon de verre T sera donnée en liaison avec la figure 2b, la lame LA à analyser étant supprimée.

Par convention, la détection et la mesure des temps de retard à la réception à la réflexion des impulsions d'échos à engendrer par les impulsions incidentes dans les deux directions de référence $Ox_i$ et $Oy_i$ sont mesurées par rapport à l'instant d'apparition de l'impulsion incidente sur la face d'entrée du tampon de verre T ou sur la face de sortie du tranducteur Py.

Par définition, ainsi que représenté en figure 2b, l'impulsion Ex(1) est une impulsion d'émission engendrée par le transducteur Px. L'impulsion Ex(1) se propage suivant l'axe Z, traverse le transducteur Py puis le tampon de verre T. Cette impulsion est alors réfléchie par l'interface tampon de verre T-R et revient par propagation en sens opposé par réflexion. Pour un écho E engendré par réflexion à l'interface tampon de verre T transducteur Py, une partie de l'énergie de l'écho E traverse le transducteur Py pour créer aux bornes du transducteur Px l'écho noté Ex au bout d'un temps égal à $2(t_v + t_y)$, relation dans laquelle $t_v$ représente le temps de transit de l'onde acoustique dans le tampon de verre T et $t_y$ représente le temps de transit de l'onde acoustique engendrée puis réfléchie à travers le transducteur Py. L' autre partie de l'énergie de l'écho E est réfléchie sur l'interface tampon de verre T-Py et engendre de manière analogue à l'impulsion incidente Ex(1) un nouvel écho noté Ex(3) séparé de l'écho Ex d'un temp égal à $2.t_v$, où $t_v$ représente le temps de transit de l'onde acoustique dans le tampon de verre T. Les autres réflexions successives de la partie d'énergie réfléchie dans la direction de propagation Oz sont alors supposées négligeables.

De même, l'impulsion incidente notée Ey(1) est l'impulsion incidente émise par le transducteur Py. L'impulsion Ey(1) se propage suivant l'axe Z dans le tampon de verre T puis est réfléchie par l'interface tampon de verre T-R et revient pour engendrer aux bornes du transducteur Py l'écho Ey au bout du temps $2.t_v$.

L'écho Ey est alors réfléchi de nouveau, ou du moins une partie de celui-ci, sur l'interface tampon Py et se propage pour créer comme l'impulsion incidente Ey(1), un nouvel écho Ey(3) séparé de l'écho Ey du temps $2. t_v$. Les autres réflexions successives de l'écho Ey sont alors négligées.

Du fait que les transducteurs Py et Px ont leur polarisation orthognale, le tampon de verre T étant isotrope, un écho polarisé selon la direction définie par le transducteur Px ne peut être reçu par le transducteur Py et réciproquement. Ceci bien entendu suppose négligeable le phénomène de diaphonie de l'électronique de réception.

Une description complète de la série d'échos obtenus en présence de la lame LA à étudier, celle-ci étant accollée au tampon de verre T sera maintenant donnée en liaison avec la figure 2c.

Compte tenu du principe physique de superposition des états d'équilibre, dans le cas où la lame LA est accollée, ainsi que représentée en figure 2a, au tampon de verre T, on retrouve bien entendu tous les échos décrits précédemment. A celà s'ajoute cependant les échos A et B tels que définis précédemment dans la description, échos dus à la traversée du matériau biréfringent constitué par la lame LA, par les échos Ex Ey précédemment décrits en l'absence de la lame LA. De plus, il apparaît, ainsi qu'il sera décrit ci-après, un écho C dû à la réception par un transducteur Px, respectivement Py d'un écho dû à une impulsion incidente émise par l'autre transducteur Py, Px respectivement.

La lame LA est par exemple collée sur la face libre du tampon de verre T par l'intermédiaire d'une fine couche d'un liant visqueux tel qu'un liant commercialisé par la société TAO-Corning. Ce type de liant permet la transmission des ondes acoustiques de type ondes ultrasonores. L'interface ainsi créée, matériau à analyser- lame LA-tampon de verre T, est pratiquement toujours mal adaptée du point de vue des impédances acoustiques ce qui a pour effet de ne pas détruire les échos Ex et Ey, mais simplement de les atténuer. L'intervalle de temps noté $t_A$ séparant l'apparition de l'écho noté A engendré par la transmission de l'énergie acoustique se propageant dans la lame LA à analyser puis après réflexion sur la face de sortie SL, en réflexion vers le transducteur Px est capté par celui-ci, est bien entendu reçu postérieurement à l'écho noté Ex par ce transducteur. Bienentendu, la longueur L du tampon de verre T est choisie en fonction des paramètres d'épaisseur et de caractéristique mécanique du matériau de la lame LA à analyser pour que l'écho A reçu par le transducteur Px apparaîsse antérieurement à l'écho noté Ex(3) engendré par un transit aller-retour de l'écho E(x) précédent dans le tampon de verre T.

De la même manière, en ce qui concerne le transducteur Py, l'écho B engendré par la propagation dans le matériau de la lame LA à analyser, n'ayant pas donné naissance à l'écho Ey précédemment décrit dans le cas de l'existence du seul tampon de verre T, apparaît sur le transducteur Py après un temps de retard noté $t_v$ par rapport à l'écho Ey précité. En outre, ainsi qu'on l'a également représenté en figure 2c, chaque transducteur Px et Py reçoit une impulsion écho, notée C, correspondant à la réception par l'un des transducteurs Px, respectivement Py d'un écho dû à l'émission de l'autre transducteur Py, respectivement Px.

Par rapport aux instants d'émission des impulsions incidentes Ex(1) et Ey(1), les échos A, respectivement B ou C interviennent à des instants de retard vérifiant respectivement les relations :

(24)    $T_A = 2t_v + 2t_y + t_A$

(25)    $T_B = 2t_v + t_B$

(26)    $T_C = t_y + 2 t_v + 2 t_c$

Dans les relations précitées $T_A$, $T_B$, $T_C$ représentent les retards de réflexion des échos après propagation dans le milieu à analyser, la lame LA, des échos A, B, C respectivement par rapport aux impulsions incidentes Ex(1) et Ey(1).

Compte tenu du fait que le matériau à analyser, la lame LA, est biréfringent, une onde émise de polarisation parallèle à la direction $Ox_i$, respectivement $Oy_i$ tourne dans le matériau considéré et provoque à la réception une excitation non seulement du transducteur Px, respectivement Py, mais également du transducteur Py, respectivement Px. Ces deux échos croisés, échos C sont obtenus au cours du même temps $T_C$.

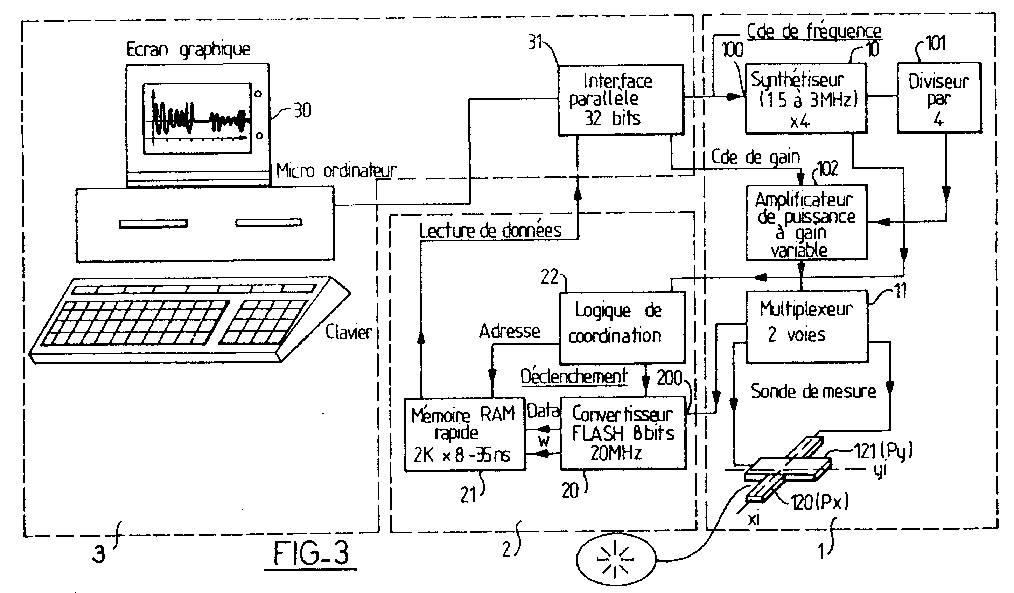

On remarquera cependant que les temps mesurés $t_A$ et $T_B$, dans lesquels interviennent les temps $t_A$ et $t_B$ indiqués sur la figure 3, ne sont pas les temps $t_R$ et $t_L$, les temps $t_A$ et $t_B$ précités ne pouvant prétendre dans le cas le plus général représenter les temps $t_R$ et $t_L$ correspondants au temps de propagation sur les axes rapide R et lent L, car les transducteurs sont inclinés de l'angle $\theta_i$ par rapport aux axes rapide et lent précités. En outre, on supposera que les matériaux sont isotrope du point de vue des atténuations.

Dans le mode de réalisation du procédé objet de l'invention représenté de manière schématique en figure 2a, 2b, 2c, les deux transducteurs Px et Py ne travaillent pas dans les mêmes conditions. Non seulement l'onde émise par Px traverse le transducteur Py d'où l'adjonction d'un temps inconnu de propagation noté ty, mais l'onde émise par le transducteur Px résonne dans le transducteur Px, une variation de fréquence ayant pour effet de modifier le temps de propagation inconnu $t_y$ précité. En outre, les deux transducteurs Px et Py ne sont pas amortis de la même manière, ces dissymétries pouvant provoquer des effets transitoires différents. L'expérience a cependant montré que le temps de propagation inconnu $t_y$ reste constant pour des fréquences éloignées de 0,1 MHz, de la fréquence de résonance des ondes, cette fréquence de résonance pour le matériel utilisé ayant été dévaluée à 1,97 MHz.

En pratique, les deux transducteurs Px et Py ne fonctionnent pas de manière identique. De manière générale, il est possible de se démarquer de cette différence.

En effet, si l'on applique aux transducteurs Px une tension Vx de la forme : $V_x = V_0 e^{(j\omega t)}$, cette tension d'excitation engendre par effet piézo-électrique une onde élastique définie par :

$$U = U_0 e^{(j\omega t)}.$$

Dans cette dernière relation, $U_0$ est une constante. Compte tenu de l'hypothèse selon laquelle l'isotropie des atténuations est supposée, on peut en fait alors prendre $U_0 = 1$.

Après propagation, les échos Ex et Ey dus aux réflexions sur l'interface tampon de verre T- matériau lame LA, s'écrivent :

(27)    $Ex = \exp(j\omega_k( t - 2 t_y - 2 t_v))$

(28)    $Ey = \exp(j\omega_k( t - 2 t_v))$.

Pour l'écho A, l'expression de celui-ci s'écrit au terme d'amplitude près compte tenu des hypothèses précédentes :

(29) $\quad A = (\cos^2\theta_i \sin^2\theta_i \exp(-2j\phi_i)) \exp(j\omega_k(t-2t_y- 2t_v-2t_R))$

Pour l'écho B l'expression de celui-ci s'écrit dans les mêmes conditions d'hypothèse :

(30) $\quad B = (\sin^2\theta_i \exp(-2j\phi) + \cos^2\theta_i) \exp (j\omega_k (t-2t_v-2t_R)$

Pour l'écho C l'expression de celui-ci s'écrit :

(31) $\quad C = \sin\theta_i\cos\theta_i (i - \exp (-2j\phi_i)) \exp(j\omega_k(t-t_y-2t_v-2t_R))$

Si ainsi que décrit précédemment, on mesure les temps de réception de l'écho par rapport au temps de réception de l'écho Ex et le temps de réception de l'écho B par rapport au temps de réception de l'écho Ey, un changement de variable de la forme $t = t-2t_R$ permet d'écrire les équations relatives aux échos A et B :

$A = (\cos^2\theta_i + \sin^2\theta_i \exp(-2j\phi_i)) \exp(j\omega_k t) \qquad (32)$
$B = (\sin^2\theta_i \exp(-2j\phi_i) + \cos^2\phi_i) \exp(j\omega_k t) \qquad (33)$

Ces expressions sont identiques à celles décrites précédemment, mais les phases des échos A et B sont des phases mesurées par rapport aux échos issus des réflexions à l'interface du tampon de verre T et du matériau constitué par la lame LA à analyser. C'est pour cette raison qu'il est avantageux d'utiliser l'équations 17 précédemment décrite dans la description. L'exploitation des équations 18 et 19 peut également être envisagée, car il est bien entendu possible de mesurer le temps $t_y$, temps inconnu, grâce aux mesures des échos Ex et Ey.

On rappelle que l'équation 17 peut être résolue par la mesure de la différence de phase ou du retard entre les signaux A et B, cette mesure de retard ou différence de phase notée s'écrivant :

(34) $\quad \lambda = 1/2\ \omega_k(t_A-t_B) = 1/2\omega_k\Delta t$

L'équation alors à résoudre devient :

(35) $\quad tg\lambda = tg\ \phi i \cos2\sigma_i$

Le principe de la mesure, conformément au procédé objet de l'invention, réside alors dans la réalisation d'une pluralité de mesures pour plusieurs directions de référence $Ox_i$, $Oy_i$ considérées, pour une pluralité de fréquences d'émission de valeur $f_k$ dans les limites de la bande passante du transducteur Px et Py. On obtient alors une série de valeurs correspondant à une courbe de la forme $tg\ \lambda = f(\omega_k)$. Il est alors nécessaire de corréler les valeurs ainsi obtenues avec la valeur $tg\phi_i \cos 2\theta_i$ pour obtenir les valeurs correspondantes de $\theta_i$ et $\phi_i$.

Bien entendu, et ce, sans sortir du cadre du procédé objet de l'invention, les étapes consistant à engendrer une onde acoustique transversale polarisée rectilignement selon une des directions de référence $Ox_i$, $Oy_i$, onde acoustique modulée en impulsion, et à la diriger vers la face d'entrée de la lame LA à étudier, de façon à soumettre la face d'entrée EL de la lame à des impulsions incidentes puis l'étape consistant à détecter et à mesurer, relativement à un instant de référence par rapport aux impulsions incidentes, des temps de retard à la réception à réflexion des impulsions d'échos engendrées par les impulsions incidentes dans les deux directions de référence précitées, peuvent être répétées pour une pluralité de directions de référence distinctes de la première pour une même valeur de fréquence, l'ensemble de ces étapes précitées étant répété pour différentes valeurs de fréquence.

De la même manière, et sans sortir du cadre du procédé objet de l'invention, il est également possible pour une direction de référence $Ox_i$, $Oy_i$, d'effectuer pour cette direction, les différentes mesures à des valeurs de fréquence $f_k$ différentes, les fréquences considérées $f_k$ variant de manière continue ou sensiblement continue, d'incréments de fréquence $df_k$. Bien entendu, des mesures correspondantes sont alors effectuées pour un même domaine de variation en fréquence $f_k$, $df_k$ pour une ou plusieurs directions de référence distinctes de la première.

Dans tous les cas, et à titre d'exemple non limitatif, le temps de retard à la réception des impulsions d'échos peut être mesuré par corrélation entre un signal représentatif de l'impulsion d'émission émise selon une des directions de référence et un signal représentatif de l'impulsion d'écho obtenue selon l'une et/ou l'autre des directions de référence.

Selon une caractéristique avantageuse du procédé objet de l'invention, les temps de retard à la réception des impulsions d'échos sont mesurés par rapport à un instant d'émission et par rapport à un instant de réception, ces instants étant définis comme la moyenne des points de passage par zéro du signal représentatif de l'onde acoustique modulée en impulsion à l'émission et à la réception. Par point de passage par zéro du signal représentatif de l'onde acoustique, on entend bien entendu les points de passage par zéro de l'onde porteuse de celle-ci.

Selon une autre caractéristique avantageuse du procédé objet de l'invention, l'onde acoustique est modulée en impulsion sensiblement rectangulaire, de durée comprise entre 10 et 20 périodes de la fréquence f de l'onde acoustique. Les impulsions émises sont émises selon des trains d'impulsions dont la période de récurrence entre impulsions est comprise entre 350 et 550 microsecondes. De manière avantageuse, les incréments de fréquence $df_k$ sont de l'ordre de 10 KHz par exemple. De préférence, la pluralité de valeurs successives de la fréquence dans la plage de fréquences d'émission comporte au moins 100 valeurs successives.

Une description plus détaillée d'un dispositif permettant la mise en oeuvre du procédé objet de l'invention, de manière automatique, sera donnée en liaison avec la figure 3.

Selon la figure précitée, le dispositif pour déterminer les paramètres de biréfringence acoustique $\theta_i$ et $\phi_i$ d'une lame à faces parallèles d'épaisseur e d'un matériau à étudier, conformément au procédé objet de l'invention, comporte avantageusement des moyens notés 1, générateurs d'une onde acoustique transversale à fréquence variable polarisée rectilignement selon une des directions de référence et modulés en impulsion. Sur la figure 3, on notera que les moyens 1 précités comportent avantageusement un synthétiseur de fréquence noté 10 comportant une entrée de commande en fréquence notée 100. Le synthétiseur de fréquence 10 est relié à un multiplexeur de voies noté 11, comportant deux voies de sortie reliées aux transducteurs Px et Py notés 120 et 121 sur la figure 3. Bien entendu, les transducteurs Px et Py peuvent être disposés, ainsi que décrits en liaison avec la figure 2a, ou de manière autre appropriée. De préférence, le synthétiseur 10 permet d'engendrer un signal électrique d'excitation de fréquence quatre fois supérieure à la fréquence ou bande passante des transducteurs 120 et 121, le signal engendré par le synthétiseur étant utilisé comme signal d'horloge pour le cadencement de l'ensemble du système électronique du dispositif représenté en figure 3 ainsi qu'il sera expliqué ci-après. Un diviseur 101, diviseur par quatre, permet d'assurer la liaison entre le synthétiseur 10 et le multiplexeur deux voies 11 par l'intermédiaire d'un amplificateur de puissance à gain variable noté 102. L'amplificateur 102 comporte une entrée de commande de gain, permettant le réglage du gain de cet amplificateur. Le synthétiseur 10, et le multiplexeur 11, sont des circuits normalement disponibles dans le commerce et ne seront pas décrits plus en détail pour cette raison.

En outre, ainsi qu'il apparaît également en figure 3, le dispositif selon l'invention comporte également des moyens 2 de détection et de mesure relativement à un instant de référence par rapport aux impulsions, des temps de retard à la réception à la réflexion des impulsions d'échos engendrées par les impulsions incidentes dans deux directions de référence $Ox_i$ et $Oy_i$ définies par deux directions arbitraires.

Ainsi qu'on pourra le constater sur la figure 3, les moyens 2 de détection et de mesure comportent un convertisseur analogique-numérique rapide noté 20, lequel reçoit sur une entrée 200, les signaux délivrés par les transducteurs 120 et 121, à la réception des ondes acoustiques réfléchies ou échos. Au convertisseur analogique-numérique rapide 20, est associée une mémoire 21, constituée par une mémoire RAM rapide. La mémoire 21 permet de mémoriser les valeurs numériques représentatives de la mesure et délivrées par le convertisseur analogique-numérique rapide 20. L'ensemble constitué par le convertisseur analogique-numérique rapide 20 et la mémoire RAM rapide 21 est piloté par un circuit logique de coordination noté 22, lequel reçoit les signaux d'horloge de cadencement délivrés par le synthétiseur 10. Le convertisseur analogique-numérique rapide 20 peut avantageusement être constitué par un convertisseur huit bits, à 20 MHz. La mémoire RAM rapide 21 peut être constituée par une mémoire de capacité 2 K octets le temps de mémorisation étant compris entre 8 et 35 ns. La logique de coordination peut consister à titre d'exemple non limitatif, en un circuit de commutation permettant d'une part la commande du convertisseur analogique-numérique rapide 20, et d'autre part, la commande de l'écriture dans la mémoire rapide 21. La logique de coordination 22 ne sera pas décrite en détail dans la mesure où celle-ci, en liaison avec le convertisseur rapide analogique-numérique 20 et la mémoire RAM rapide 21, peut être constituée par des systèmes de type classique.

Selon une variante avantageuse du convertisseur analogique-numérique rapide représenté en figure 3, celui-ci peut être constitué par un convertisseur dit flash à 20 MHz. Cette fréquence étant normalement insuffisante pour obtenir le nombre de point par période de signal nécessaire pour un traitement très efficace, on effectue avantageusement quatre séquences de mesure déphasées de $\pi/2$. Ainsi, on obtient

EP 0 297 983 B1

une fréquence d'échantillonnage équivalente de 80 MHz et 40 points sont mesurés par période du signal de la porteuse de l'onde acoustique à 2 MHz. Bien entendu, on suppose une stabilité parfaite du signal pendant cette opération.

Ainsi qu'il apparaît également en figure 3, le dispositif objet de l'invention comporte également des moyens 3 de calcul permettant d'établir la valeur des paramètres de biréfringence acoustique $\theta_i$ et $\phi_i$ par résolution d'une combinaison des équations liant les paramètres de biréfringence précités. Avantageusement, les moyens de calcul 3 comportent un microordinateur noté 30. Le microordinateur 30 peut avantageusement être constitué par un microordinateur comportant un microprocesseur de type 8086 ou 80286 commercialisé par la société INTEL. Bien entendu, le microordinateur est muni de ses ressources periphériques. En outre, au microordinateur 30 est associé un circuit d'interface 31, permettant la liaison du microordinateur, d'une part au synthétiseur 10 et, d'autre part, à la mémoire RAM rapide 21 et au circuit logique de coordination 22. Le circuit d'interface 31 est un circuit d'entrée/sortie parallèle sur 32 bits plus huit bits de contrôle. Le circuit d'interface 31 est un circuit de type classique, permettant de gérer la fréquence engendrée par le synthétiseur 10, l'amplitude du signal d'excitation injecté aux sondes ou transducteurs 120 et 121, la largeur du train d'ondes envoyées à ces mêmes transducteurs, le déclenchement des différentes phases de mesure pour la conduite optimale du procédé objet de l'invention. Bien entendu, le circuit interface 31 permet également la lecture des données enregistrées dans la mémoire rapide 21, cette lecture permettant le transfert des données mesurées dans la mémoire centrale de l'ordinateur. Ces différentes opérations, sauf en ce qui concerne le déclenchement des différentes phases de mesure, afin de réaliser une conduite optimale du procédé objet de l'invention, ne seront pas décrites en détail car elles correspondent à des opérations classiques.

Bien entendu, selon une variante avantageuse du dispositif objet de l'invention, les moyens 1 générateurs d'une onde acoustique transversale peuvent comprendre avantageusement une pluralité de transducteurs 120, 121, ces transducteurs étant alors disposés en rosace, ainsi que représenté en vue agrandie sur la figure 3. De préférence, les transducteurs constituant la rosace sont perpendiculaires deux à deux. Dans ce cas, le multiplexeur 11 est constitué par un multiplexeur multivoie et l'émission selon une première direction de référence $Ox_i$, $Oy_i$, puis selon des directions de référence successives est commandée directement par le multiplexeur, par l'intermédiaire du circuit interface 31 et du circuit de logique de coordination 22. Les circuits de logique de coordination 22 ou moyens de commande permettent d'assurer une commande séquentielle de l'émission des impulsions d'émission, de la réception des impulsions d'échos et de leur échantillonnage respectif, par le convertisseur analogique-numérique rapide 20 et la mémoire rapide 21.

Afin d'assurer la conduite du procédé objet de l'invention de manière optimale, le dispositif représenté en figure 3 et en particulier le microordinateur 30 peut comprendre un microprocesseur dans la mémoire auxiliaire de travail duquel est implanté un programme de type "menu", permettant par l'intermédiaire d'un dialogue interactif avec l'opérateur, la conduite optimale du procédé de mesure tel que précédemment décrit.

Dans ce cas, l'opérateur peut avantageusement être invité préalablement à la conduite proprement dite du procédé, a successivement déterminer la valeur de la plage de fréquence de l'onde acoustique en fonction de la bande passante des transducteurs d'émission/réception et où de la nature du matériau à analyser, à déterminer la durée des impulsions de modulation entre 10 et 20 fois la durée de la période de l'onde acoustique de fréquence $f_k$, à déterminer la période de récurrence $\tau$ des impulsions entre 350 et 550 µs, à déterminer pour l'essai en cours, en fonction des paramètres mécaniques connus de la lame, tels que sont épaisseur par exemple, l'utilisation ou l'absence d'utilisation d'un élément tampon T acoustiquement isotrope.

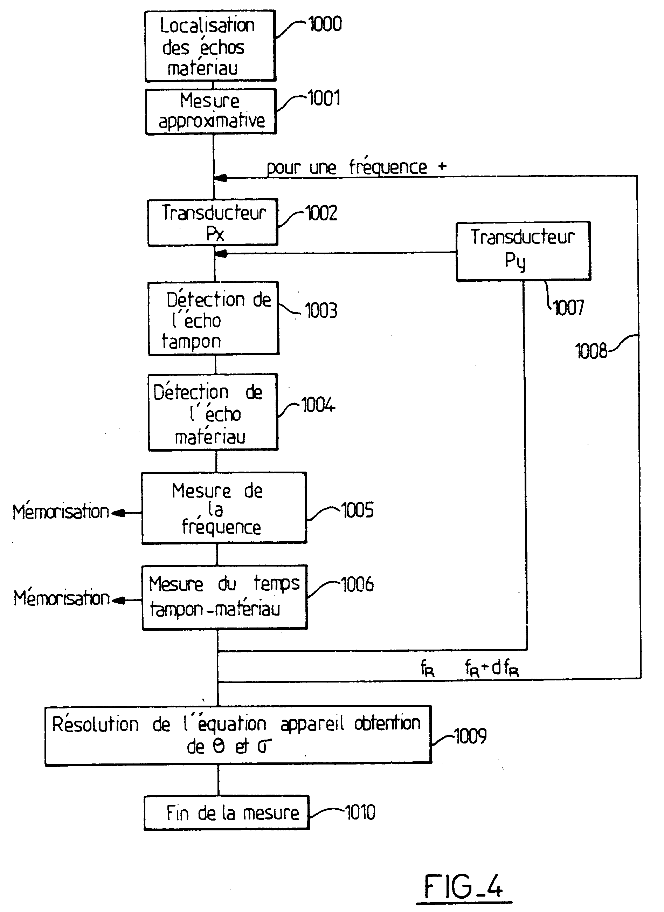

Un exemple de conduite optimale du procédé objet de l'invention à l'aide du dispositif tel que représenté en figure 3, sera maintenant décrit en relation avec la figure 4.

Selon la figure 4 précitée, le procédé objet de l'invention étant mis en oeuvre dans le cas où deux directions de référence sont utilisées, celles-ci étant confondues avec les directions arbitraires du repère $Ox_i$ et $Oy_i$, ce procédé peut consister en un premier temps à effectuer en une étape notée 1000, une localisation de l'écho matériau, c'est-à-dire l'écho renvoyé par la lame LA à analyser, de façon à vérifier que l'écho matériau est compris entre les deux premiers échos tampon, échos notés Ex et Ex(3) sur la figure 2c.

Le procédé objet de l'invention tel que représenté en figure 4, consiste ensuite à effectuer une étape de détermination de la valeur approchée du déphasage, $\phi_i$ en une étape notée 1001. Dans ce but, le programme "menu" peut comporter un sous-programme de détermination de la valeur approchée de déphasage $\phi_i$ à partir des valeurs du paramètre mc mémorisé pour différentes fréquences de l'onde acoustique $f_k$, dans la plage de fréquence considérée, le paramètre mc vérifiant la relation mc = $Sin^2\theta_i$ x

12

Sin$\phi_i$. Dans cette relation, l'expression sin²$\theta_i$ pour la lame à analyser est considérée comme constante. Le paramètre mc permet ainsi de donner une valeur approchée de la phase $\phi$i. En un deuxième temps, le procédé objet de l'invention tel que représenté en figure 4, consiste, par exemple, en une étape 1002 à émettre selon la première direction de référence, par exemple la direction OX$_i$, un train d'impulsions d'une onde acoustique à une première fréquence déterminée de valeur $f_k$. Le premier écho Ex(1) engendré par l'élément tampon T, lorsque celui-ci est utilisé, est alors détecté et mémorisé en une étape 1003, puis le deuxième écho A, écho engendré par la lame à faces parallèles LA, est ensuite détecté et mémorisé en une étape 1004. Une mesure fine de la fréquence $f_k$ de l'onde acoustique peut alors ensuite être réalisée à partir des échos mémorisés, en une étape suivante 1005.

Puis, la mesure du temps $t_A$ séparant les deux échos précédemment enregistrés aux étapes 1003 et 1004, échos engendrés par l'élément tampon et échos engendrés par la lame à faces localement parallèles est effectuée en une étape 1006, la mémorisation des valeurs de fréquence déterminées à l'étape 1005 et du temps $t_A$ déterminé à l'étape 1006 étant effectuée.

Dans un troisième temps, les étapes définies dans le deuxième temps relativement à la première direction de référence Ox$_i$, étapes 1003, 1004, 1005 et 1006, sont répétées relativement à la deuxième directions de référence Oy$_i$, cette répétition étant symbolisée par la boucle de retour et l'excitation du transducteur Py en une étape 1007.

En outre, en une pluralité de temps successifs, une étape supplémentaire consiste à répéter relativement aux première et deuxième directions Ox$_i$ et Oy$_i$ les étapes définies aux deuxième et troisième temps pour une pluralité de valeurs successives $f_k$ + d$f_k$ de la fréquence dans la plage de fréquences d'émission considérée. Cette répétition relativement aux première et deuxième directions est symbolisée par la boucle de retour notée 1008 sur la figure 4.

Suite à la mise en oeuvre des étapes précitées, la résolution de l'équation précédemment décrite permet l'obtention des valeurs des paramètres de biréfringence $\theta_i$ et $\phi_i$ ou $\sigma$. Cette résolution est évidemment mise en oeuvre directement par le programme de calcul de l'ordinateur, par l'intermédiaire d'un sous-programme ajouté au programme "menu". L'étape de résolution de l'équation précitée est notée 1009 sur la figure 4. Suite à la résolution et à l'obtention des valeurs des paramètres de biréfringence, une étape 1010 affiche la fin de la mesure.

On a ainsi décrit un procédé et un dispositif pour déterminer les paramètres de biréfringence acoustique $\theta_i$ et $\phi_i$ d'une lame à faces localement parallèles d'épaisseur e d'un matériau à étudier, particulièrement performant. En effet, le procédé et le dispositif objet de l'invention présentent une très grande souplesse d'utilisation puisqu'ils peuvent être adaptés en fonction des caractéristiques mécaniques du matériau à étudier, notamment l'épaisseur. En outre, ils permettent une bonne précision de mesure en raison de la discrimination des impulsions d'échos effectuée par l'utilisation d'un tampon de matériau isotrope.

**Revendications**

**1.** Procédé pour déterminer les paramètres de biréfringence acoustique $\theta_i$ et $\phi_i$ d'une lame (LA) à faces localement parallèles d'épaisseur (e) d'un matériau à étudier, par rapport à au moins deux directions de référence données définies par rapport à un repère (Ox$_i$, Oy$_i$) défini par deux directions arbitraires, le paramètre $\theta$i étant défini comme l'angle de décalage des axes lent (L) et rapide (R) de la lame (LA) par rapport au repère (Ox$_i$, Oy$_i$) et le paramètre $\phi_i$ étant défini comme l'angle de déphasage entre les ondes résultantes se propageant suivant les axes rapide (R) et lent (L) dans une épaisseur de matériau, caractérisé en ce que ledit procédé consiste:

a) à engendrer une onde acoustique transversale polarisée rectilignement selon une des directions de référence et modulée en impulsions et à la diriger vers la face d'entrée de la lame à étudier en soumettant ainsi ladite face d'entrée (EL) de la lame (LA) à des impulsions incidentes,

b) à détecter et à mesurer, relativement à un instant de référence par rapport auxdites impulsions incidentes, les temps de retard, à la réception en réflexion, des impulsions d'écho engendrées par lesdites impulsions incidentes dans les deux directions de référence précitées,

c) à répéter les étapes a) et b) précédentes pour au moins une deuxième direction de référence, distincte de la première, l'onde acoustique transversale étant polarisée selon ladite deuxième direction de référence,

d) à répéter les étapes a), b) et c) pour une pluralité de valeurs distinctes de la fréquence de l'onde acoustique en obtenant ainsi un ensemble de valeurs des temps de retard, à la réception en réflexion, des impulsions d'écho engendrées par lesdites impulsions incidentes pour différentes valeurs de la fréquence d'émission de l'onde acoustique incidente,

e) à déterminer les paramètres de biréfringence $\theta_i$ et $\phi_i$ par résolution d'une combinaison des équations liant les paramètres de biréfringence $\theta_i$ et $\phi_i$ pour les différentes valeurs de fréquence d'émission.

2. Procédé selon la revendication 1, caractérisé en ce que les étapes c) et d) sont interverties de façon à effectuer en une étape c') pour une même direction de référence, les étapes a) et b) pour une pluralité de valeurs distinctes de la fréquence de l'onde acoustique, puis, en une étape d'), les mêmes opérations a), b), c') pour au moins une deuxième direction de référence distincte de la première.

3. Procédé selon l'une des revendications précédentes, caractérisé en ce que les temps de retard, à la réception, des impulsions d'écho sont mesurés par corrélation entre un signal représentatif de l'impulsion d'émission émise selon l'une des directions de référence, et un signal représentatif de l'impulsion d'écho obtenue selon l'une et/ou l'autre des directions de référence.

4. Procédé selon l'une des revendications 1 ou 2, caractérisé en ce que les temps de retard, à la réception, des impulsions d'écho sont mesurés par rapport à un instant d'émission et par rapport à un instant de réception définis comme la moyenne des points de passage par zéro du signal représentatif de l'onde acoustique modulée en impulsions à l'émission et à la réception.

5. Procédé selon l'une des revendications précédentes, caractérisé en ce que la fréquence $f_k$ de l'onde acoustique d'émission est comprise dans la bande passante des transducteurs.

6. Procédé selon l'une des revendications précédentes, caractérisé en ce que ladite onde acoustique est modulée en impulsions sensiblement rectangulaires de durée comprise entre 10 et 20 périodes de la fréquence $f_k$ de l'onde acoustique.

7. Procédé selon la revendication 6, caractérisé en ce que lesdites impulsions sont émises selon des trains d'impulsions dont la période de récurrence $\tau$, entre impulsions, est comprise entre 350 et 550 $\mu$s.

8. Procédé selon l'une des revendications 1 à 7, caractérisé en ce que, en vue d'effectuer une discrimination convenable deséchos engendrés par la lame à face parallèle ou matériau à étudier, ladite onde acoustique modulée en impulsions est dirigée vers la face d'entrée de ladite lame par l'intermédiaire d'un élément tampon (T) acoustiquement isotrope d'épaisseur déterminée.

9. Procédé selon la revendication 8, caractérisé en ce que dans le cas où deux directions de référence sont utilisées, celles-ci étant confondues avec les directions arbitraires du repère (Ox$_i$, Oy$_i$) ledit procédé consiste en un premier temps :
  - à effectuer une étape de localisation de l'écho matériau de façon à vérifier que ledit écho matériau est compris entre les deux premiers échos tampon,
  - à effectuer une étape de détermination de la valeur approchée du déphasage $\phi_i$,
      en un deuxième temps :
  - à émettre selon la première direction de référence (Ox$_i$)un train d'impulsions d'une onde acoustique à une première fréquence $f_k$
  - à détecter et mémoriser le premier écho (E$_{x(1)}$) écho engendré par l'élément tampon,
  - à détecter et mémoriser le deuxième écho (A), écho engendré par la lame à faces parallèles à étudier,
  - à effectuer, à partir desdits échos mémorisés, une mesure fine de la fréquence $f_k$ de l'onde acoustique,
  - à effectuer, à partir desdits échos mémorisés, la mesure du temps $t_A$ séparant les deux échos, écho engendré par l'élément tampon et écho engendré par la lame à faces localement parallèle,
      en un troisième temps :
  - à répéter, relativement à la deuxième direction de référence (Oy$_i$), les étapes définies dans le deuxième temps relativement à la première direction (Ox$_i$),
  - en une pluralité de temps successifs :
  - à répéter, relativement aux première et deuxième directions (Ox$_i$) et (Oy$_i$), les étapes définies aux deuxième et troisième temps pour une pluralité de valeurs successives $f_k + df_k$ de la fréquence dans la plage de fréquence d'émission.

**10.** Procédé selon la revendication 9, caractérisé en ce que les incréments de fréquence $df_k$ sont de l'ordre de 10 kHz, la pluralité de valeurs successives de la fréquence dans la plage de fréquence d'émission comportant au moins cent valeurs successives.

**11.** Dispositif pour déterminer les paramètres de biréfringence acoustique $\theta_i$ et $\phi_i$ d'une lame à faces parallèles d'épaisseur (e) d'un matériau à étudier, conformément au procédé selon l'une des revendications 1 à 10, caractérisé en ce qu'il comporte :
- des moyens (1) générateurs d'une onde acoustique transversale fréquence variable polarisée rectilignement selon une des directions de référence et modulée en impulsions,
- des moyens (2) de détection et de mesure, relativement à un instant de référence par rapport auxdites impulsions, des temps de retard, à la réception en réflexion, des impulsions d'écho engendrées par lesdites impulsions incidentes dans deux directions de référence (Oxi, Oyi) définies par deux directions arbitraires,
- des moyens (3) de calcul permettant d'établir la valeur des paramètres de biréfringence acoustique $\theta_i$ et $\phi_i$ résolution d'une combinaison des équations liant les paramètres de biréfringence $\theta_i$, $\phi_i$ pour différentes valeurs de fréquence d'émission.

**12.** Dispositif selon la revendication 11, caractérisé en ce que lesdits moyens (1) générateurs d'une onde acoustique à fréquence variable polarisée rectilignement selon une des directions de référence, comprennent :
- des moyens (10) synthétiseurs de fréquence à commande de fréquence délivrant un signal électrique excitateur sinusoïdal de fréquence égale à la fréquence de l'onde acoustique de fréquence $f_k$,
- des moyens (11) multiplexeurs multivoies recevant ledit signal électrique d'excitation par l'intermédiaire d'un amplificateur (102) de puissance à gain ajustable,
- une pluralité (120,121) de transducteurs électro-acoustiques d'émission des impulsions de ladite onde acoustique et de réception desdits échos d'impulsions.

**13.** Dispositif selon la revendication 11, caractérisé en ce que lesdits moyens (2) de détection et de mesure relativement à un instant de référence par rapport auxdites impulsions des temps de retard, à la réception en réflexion, des impulsions d'écho engendrées par lesdites impulsions incidentes comprennent :
- des moyens (20) d'échantillonnage rapide des impulsions d'émission et des impulsions d'écho émises respectivement reçues par lesdits transducteurs,
- des moyens (21) de numérisation et de mémorisation des valeurs échantillonnées des impulsions d'émission et des impulsions d'écho,
- des moyens (22) de commande permettant d'assurer une commande séquentielle de l'émission desdites impulsions d'émission, de la réception desdites impulsions d'écho et de leur échantillonnage respectif, de la mémorisation des valeurs échantillonnées correspondantes.

**14.** Dispositif selon la revendication 11 et 13, caractérisé en ce que lesdits moyens (3) de calcul permettant d'établir la valeur des paramètres de biréfringence acoustique $\theta_i$ et $\phi_i$ par résolution d'une combinaison des équations liant les paramètres de biréfringence $\theta_i$ et $\phi_i$pour différentes valeurs de commande séquentielle sont constitués par un microordinateur (30) muni de ses moyens périphériques interconnecté par l'intermédiaire d'un circuit d'interface parallèle (31).

**15.** Dispositif selon la revendication 14, caractérisé en ce que ledit microordinateur (30) comprend un microprocesseur dans la mémoire auxiliaire de travail duquel est implanté un programme de type "menu" permettant par l'intermédiaire d'un dialogue interactif avec l'opérateur, la conduite du procédé selon l'une des revendications 1 ou 2 ou 8 ou 9, l'opérateur étant invité préalablement à la conduite proprement dite du procédé :
- à déterminer la valeur de la plage de fréquence de l'onde acoustique en fonction de la bande passante des transducteurs d'émission-réception et/ou de la nature du matériau à analyser,
- à déterminer la durée des impulsions de modulation entre 10 et 20 fois la durée de la période de l'onde acoustique de fréquence $f_k$
- à déterminer la période de récurrence $\tau$ des impulsions entre 350 et 55 $\mu$s,
- à déterminer, pour l'essai en cours, l'utilisation ou l'absence d'utilisation d'un élément tampon (T) acoustiquement isotrope.

**16.** Dispositif selon la revendication 15, caractérisé en ce que ledit programme "menu" comporte un sous-programme de calcul des temps de retard, à la réception, des impulsions d'écho conformément à la revendication 3 ou 4.

**17.** Dispositif selon l'une des revendications 15 ou 16, caractérisé en ce que ledit programme "menu" comporte un sous-programme de détermination de la valeur approchée du déphasage $\phi_i$ à partir des valeurs du paramètre mc mémorisées pour différentes fréquences de l'onde acoustique $f_k$ dans la plage de fréquence considérée, le paramètre mc vérifiant la relation :

$$mc = Sin2\theta_i \times Sin\phi_i$$

relation dans laquelle l'expression $sin2\theta_i$ pour la lame analysée est considérée comme constante.

**Claims**

**1.** Process for determining the acoustic birefringence parameters $\theta_i$ and $\phi_i$ of a plate (LA) with locally parallel faces of thickness (e) in a material under investigation, with respect to at least two given reference directions defined with respect to a frame of reference ($OX_i$, $Oy_i$) defined by two arbitrary directions, the parameter $\phi i$ being defined as the angle between the slow (L) and fast (R) axes of the plate (LA) with respect to the frame of reference ($Ox_i$, $Oy_i$) and the parameter $\emptyset i$ being defined as the phase shift angle between the resultant waves propagating along the fast (R) and slow (L) axes through a thickness of material, characterised by the fact that the said process consists of:
a) generating a transverse acoustic wave polarised linearly along one of the reference directions and pulse modulated and directing it towards the input face of the plate under investigation thus subjecting the said input face (EL) of the plate (LA) to incident pulses,
b) detecting and measuring, relative to a reference time with respect to the said incident pulses, the delay times to reception of the reflected echo pulses generated by the said incident pulses in the two above-mentioned reference directions,
c) repeating the above stages a) and b) for at least a second reference direction, distinct from the first, the transverse acoustic wave being polarised along the said second reference direction,
d) repeating the stages a), b) and c) for a number of distinct values of the frequency of the acoustic wave thus obtaining a set of values of delay times to reception of the reflected echo pulses generated by the said incident pulses for different values of the emission frequency of the incident acoustic wave,
e) determining the birefringence parameters $\theta_i$ and $\phi_i$ by resolving a combination of the equations relating the birefringence parameters $\theta_i$ and $\phi_i$ for the different values of emission frequency.

**2.** Process according to claim 1, characterised by the fact that the stages c) and d) are transposed so as to perform in a stage c') for a given reference direction the stages a) and b) for a number of distinct values of the frequency of the acoustic wave, then, in a stage d'), the same operations a), b) and c') for at least one other reference direction distinct from the first.

**3.** Process according to one of the above claims, characterised by the fact that the delay times to reception of the echo pulses are measured by correlating a signal representing the emission pulse emitted along one of the reference directions with a signal representing the echo pulse obtained along one and/or the other of the reference directions.

**4.** Process according to one of the claims 1 or 2, characterised by the fact that the delay times to reception of the echo pulses are measured with respect to an emission time and with respect to a reception time defined as the mean of the times at which the signal representing the pulse modulated acoustic wave passes through zero at emission and reception.

**5.** Process according to one of the above claims, characterised by the fact that the frequency $f_k$ of the emission acoustic wave lies within the pass band of the transducers.

**6.** Process according to one of the above claims, characterised by the fact that the said acoustic wave is modulated by substantially rectangular pulses of duration between 10 and 20 periods of the frequency fk of the acoustic wave.

**7.** Process according to claim 6, characterised by the fact that the said pulses are emitted as series of pulses whose recurrence period Á between pulses lies between 350 and 550 $\mu$s.

**8.** Process according to one of the claims 1 to 7, characterised by the fact that in order suitably to discriminate between the echoes generated by the parallel-sided plate or material under investigation, the said pulse modulated acoustic wave is directed towards the input face of the said plate through an acoustically isotropic buffer plate (T) of given thickness.

**9.** Process according to claim 8, characterised by the fact that when two reference directions are used, these coinciding with the arbitrary directions of the frame of reference ($Ox_i$, $Oy_i$) the said process consists in an initial phase of:
- performing a stage involving locating the material echo in order to verify that the said material echo lies between the first two buffer echoes,
- performing a stage involving determining the approximate value of the phase shift $\phi_i$,
  and in a second phase of:
- emitting along the first reference direction ($Ox_i$) a series of pulses of an acoustic wave with an initial frequency fk
- detecting and storing the first echo Ex(1) generated by the buffer block,
- detecting and storing the second echo (A) generated by the parallel-sided plate under investigation,
- performing an accurate measurement of the frequency $f_k$ of the acoustic wave on the basis of the said stored echoes,
- measuring, on the basis of the said stored echoes, the time $t_A$ separating the two echoes, being the echo generated by the buffer block and the echo generated by the plate with locally parallel faces,
  and in a third phase of:
- repeating, relative to the second reference direction ($Oy_i$), the stages defined in the second phase relative to the first direction ($Ox_i$),
  and in a number of successive phases of:
- repeating, relative to the first and second directions ($Ox_i$) and ($Oy_i$), the stages defined in the second and third phases for a number of successive values $f_k$ + $df_k$ of the frequency within the emission frequency range.

**10.** Process according to claim 9, characterised by the fact that the frequency increments $df_k$ are of the order of 10 kHz, the number of successive values of frequency in the emission frequency range comprising at least one hundred successive values.

**11.** Device for determining the acoustic birefringence parameters $\theta i$ and $\phi i$ of a parallel-sided plate of thickness (e) in a material under investigation, conforming with the process according to one of the claims 1 to 10, characterised by the fact that it comprises:
- means (1) of generating a transverse acoustic wave of variable frequency polarised linearly along one of the reference directions and pulse modulated,
- means (2) of detecting and measuring, relative to a reference time with respect to the said pulses, delay times to reception of the reflected echo pulses generated by the said incident pulses in two reference directions ($Ox_i$, $Oy_i$) defined by two arbitrary directions,
- means (3) of calculation for determining the value of the acoustic birefringence parameters $\theta_i$ and $\phi_i$ by resolving a combination of the equations relating the birefringence parameters $\theta_i$, $\phi_i$ for different values of emission frequency.

**12.** Device according to claim 11, characterised by the fact that the said means (1) of generating a variable frequency acoustic wave linearly polarised along one of the reference directions comprise:
- means (10) of frequency synthesis with frequency control providing an electrical sinusoidal exciting signal of frequency equal to the frequency of the acoustic wave of frequency $f_k$,
- means (11) of multi-channel multiplexing receiving the said electrical excitation signal through a variable-gain power amplifier,
- a number (120, 121) of electro-acoustic transducers for emitting pulses of the said acoustic wave and receiving the said pulse echoes.

17

**13.** Device according to claim 11, characterised by the fact that the said means (2) of detection and measurement relative to a reference time with respect to the said pulses of delay times to reception of reflected echo pulses generated by the said incident pulses comprise:
- means (20) for rapidly sampling emission pulses and echo pulses emitted or received by the said transducers,
- means (21) for digitising and storing sampled values of the emission pulses and echo pulses,
- means (22) of control for the sequential control of the emission of the said emission pulses, and of the reception of the said echo pulses and their respective sampling, and for storing the corresponding sampled values.

**14.** Device according to claims 11 and 13, characterised by the fact that the said means (3) of calculation for determining the value of the acoustic birefringence parameters $\theta_i$ and $\phi_i$ by resolving a combination of the equations relating the birefringence parameters $\theta_i$ and $\phi_i$ for different values of sequential control consist of a microcomputer (30) provided with its peripheral facilities interconnected through a parallel interface circuit (31).

**15.** Device according to claim 14, characterised by the fact that the said microcomputer (30) comprises a microprocessor in whose auxiliary working memory is implanted a program of the "menu" type permitting operation of the process according to one of the claims 1 or 2 or 8 or 9 through an interactive dialogue with the operator, the operator being invited prior to the operation of the process as such:
- to determine the value of the frequency range of the acoustic wave as a function of the pass band of the emission-reception transducers and/or of the nature of the material under analysis,
- to determine the duration of the modulation pulses between 10 and 20 times the duration of the period of the acoustic wave of frequency $f_k$,
- to determine the recurrence period $\tau$ of the pulses between 350 and 550 $\mu$s,
- to determine, for the current test, whether to use an acoustically isotropic buffer block (T).

**16.** Device according to claim 15, characterised by the fact that the said "menu" program includes a sub-program for calculating delay times to reception of the echo pulses in accordance with claim 3 or 4.

**17.** Device according to one of the claims 15 or 16, characterised by the fact that the said "menu" program includes a sub-program for determining the approximate value of the phase shift øi on the basis of the values of the parameter mc stored for different frequencies of the acoustic wave $f_k$ in the range of frequency considered, the parameter mc satisfying the relationship:

$$mc = \sin 2\theta_i \times \sin\phi_i$$

in which the expression $\sin 2\theta_i$ for the plate under analysis is regarded as constant.

**Patentansprüche**

**1.** Verfahren zur Ermittlung der akustischen Doppelbrechungsparameter $\theta_i$ und $\phi_i$ eines Prüflings (LA) mit stellenweise parallel verlaufenden Seiten mit einer Dicke (e) eines zu prüfenden Werkstoffs, im Verhältnis zu mindestens zwei gegebenen Bezugsrichtungen, die im Verhältnis zu einem Kennzeichen (Ox$_i$, Oy$_i$) definiert sind, das durch zwei willkürliche Richtungen definiert ist, wobei der Parameter $\theta_i$ als Verschiebungswinkel der langsamen Achse (L) und der schnellen Achse (R) des Prüflings (LA) im Verhältnis zum Kennzeichen (Oxi, Oyi), und der Parameter $\phi_i$ als Phasenverschiebungswinkel zwischen den resultierenden Wellen, die sich gemäss der schnellen Achse (R) und der langsamen Achse (L) in einer Werkstoffdicke (e) ausbreiten, definiert ist, dadurch gekennzeichnet, dass das besagte Verfahren darin besteht:
a) eine Querschallwelle zu erzeugen, die geradlinig gemäss einer der Bezugsrichtungen polarisiert und impulsmoduliert ist, und sie auf die Eingangsseite des zu analysierenden Prüflings zu lenken, wobei die besagte Eingangsseite (EL) des Prüflings (LA) einfallenden Impulsen ausgesetzt wird,
b) die Verzögerungszeiten im Verhältnis zu einem Bezugszeitpunkt gegenüber den besagten einfallenden Impulsen beim Empfang der rückgestrahlten Echoimpulse, die von den besagten einfallenden Impulsen in beiden vorgenannten Bezugsrichtungen erzeugt wurden, zu erfassen und zu messen,

c) die vorherigen Etappen a) und b) für mindestens eine zweite Bezugsrichtung zu wiederholen, die sich von der ersten unterscheidet, wobei die Querschallwelle gemäss der besagten zweiten Bezugsrichtung polarisiert ist,

d) die vorherigen Etappen a), b) und c) zu wiederholen, um eine Vielzahl verschiedener Werte der Schallwellenfrequenz zu erhalten und somit ein Wertenetz der Verzögerungszeiten zu erstellen, beim Empfang der rückgestrahlten Echoimpulse, die von den besagten einfallenden Impulsen für verschiedene Sendefrequenzwerte der einfallenden Schallwelle erzeugt wurden,

e) die Doppelbrechungsparameter $\theta_i$ und $\phi_i$ durch Auflösung einer Kombination von Gleichungen, die die Doppelbrechungsparameter $\theta_i$ und $\phi_i$ für die verschiedenen Sendefrequenzwerte verbinden, zu ermitteln.

2. Verfahren gemäss dem Anspruch 1, dadurch gekennzeichnet, dass die Etappen c) und d) so ausgetauscht werden, dass in einer Etappe c') für eine gleiche Bezugsrichtung die Etappen a) und b) für eine Vielzahl von unterschiedlichen Frequenzwerten der Schallwelle, und dann in einer Etappe d') die gleichen Vorgänge a), b), c') für mindestens eine Bezugsrichtung, die sich von der ersten unterscheidet, durchgeführt werden.

3. Verfahren gemäss einem der vorangehenden Ansprüche, dadurch gekennzeichnet, dass die Verzögerungszeiten beim Empfang der Echoimpulse durch Korrelation zwischen einem den gemäss einer der Bezugsrichtungen gesendeten Sendeimpuls darstellenden Signal, und einem das gemäss der einen und/oder anderen Bezugsrichtung erhaltenen Echoimpuls darstellenden Signal gemessen werden.

4. Verfahren gemäss einem der Ansprüche 1 oder 2, dadurch gekennzeichnet, dass die Verzögerungszeiten beim Empfang der Echoimpulse im Verhältnis zu einem Sendezeitpunkt und im Verhältnis zu einem Empfangszeitpunkt gemessen werden, die als Mittelwert der Nulldurchgangspunkte des die bei der Sendung und beim Empfang impulsmodullerte Schallwelle darstellenden Signals.

5. Verfahren gemäss einem der vorangehenden Ansprüche, dadurch gekennzeichnet, dass die Frequenz $f_k$ der Sendeschallwelle auf der Bandbreite der Transduktoren enthalten ist.

6. Verfahren gemäss einem der vorangehenden Ansprüche, dadurch gekennzeichnet, dass die besagte Schallwelle in ungefähr rechteckige Impulse von einer Dauer zwischen 10 und 20 Perioden der Frequenz $f_k$ der Schallwelle moduliert wird.

7. Verfahren gemäss dem Anspruch 6, dadurch gekennzeichnet, dass die besagten Impulse entsprechend Impulszügen gesendet werden, deren Impulsfolgeperiode 350 bis 550 $\mu$s beträgt.

8. Verfahren gemäss einem der Ansprüche 1 bis 7, dadurch gekennzeichnet, dass die besagte impulsmodulierte Schallwelle mittels einem akustisch isotropen Pufferelement (T) einer bestimmten Dicke auf die Eingangsseite des besagten Prüflings gerichtet wird, um eine geeignete Unterscheidung der vom Prüfling mit parallel verlaufenden Seiten bzw. dem zu prüfenden Werkstoff erzeugten Echos vorzunehmen.

9. Verfahren gemäss dem Anspruch 8, dadurch gekennzeichnet, dass bei zwei verwendeten Bezugsrichtungen, diese mit den willkürlichen Richtungen des Kennzeichens ($Ox_i$, $Oy_i$) übereinstimmen, wobei das besagte Verfahren erstens darin besteht:
- eine ortsbestimmende Etappe des Werkstoffechos durchführen, um zu prüfen, ob das besagte Werkstoffecho zwischen den ersten beiden Pufferechos liegt,
- eine Etappe zur Ermittlung des Näherungswerts der Phasenverschiebung $\phi i$ durchzuführen,
zweitens:
- gemäss der ersten Bezugsrichtung ($Ox_i$) einen Impulszug einer Schallwelle mit einer ersten Frequenz $f_k$ zu senden,
- das erste vom Pufferelement erzeugte Echo (Ex(1)) zu erfassen und zu speichern,
- das zweite, vom zu analysierenden Prüfling mit parallel verlaufenden Seiten erzeugte Echo (A) zu erfassen und zu speichern,
- ausgehend von den besagten, gespeicherten Echos, eine Feinmessung der Frequenz $f_k$ der Schallwelle vorzunehmen,
- ausgehend von den besagten, gespeicherten Echos, die Zeit $t_A$, die die beiden vom Pufferele-

EP 0 297 983 B1

ment und vom Prüfling mit stellenweise parallelen Seiten erzeugten Echos trennt, zu messen, drittens:

- die unter zweitens im Verhältnis zur ersten Richtung ($Ox_1$) definierten Etappen im Verhältnis zur zweiten Bezugsrichtung ($Oy_1$) zu wiederholen,
- in einer Vielzahl von aufeinanderfolgenden Zeiten,
- die unter zweitens und drittens definierten Zeiten für eine Vielzahl von aufeinanderfolgenden Werten $f_k + df_k$ der Frequenz innerhalb des Sendefrequenzbereichs im Verhältnis zur ersten und zweiten Richtung ($Ox_i$) und ($Oy_i$) zu wiederholen.

10. Verfahren gemäss dem Anspruch 9, dadurch gekennzeichnet, dass die Inkremente der Frequenz $df_k$ ungefähr 10 kHz betragen, wobei die aufeinanderfolgenden Werte der Frequenz im Sendefrequenzbereich mindestens hundert aufeinanderfolgende Werte umfassen.

11. Vorrichtung zur Ermittlung der akustischen Doppelbrechungsparameter $\theta_i$ und $\phi_i$ eines Prüflings mit parallel verlaufenden Seiten einer Dicke (e) eines zu prüfenden Werkstoffs, in Übereinstimmung mit dem Verfahren gemäss einem der Ansprüche 1 bis 10, dadurch gekennzeichnet, dass sie aus folgenden Mitteln besteht:

- Mitteln (1) zur Erzeugung einer frequenzgeregelten Querschallwelle, die geradlinig entsprechend einer der Bezugsrichtungen polarisiert und impulsmoduliert ist,
- Mitteln (2) zur Erfassung und zur Messung, im Verhältnis zu einem Bezugszeitpunkt gegenüber den besagten Impulsen, der Verzögerungszeiten beim rückgestrahlten Empfang der von den besagten, in beiden von zwei willkürlichen Richtungen definierten Bezugsrichtungen ($Ox_i$, $Oy_i$) einfallenden Impulsen erzeugten Echoimpulse,
- Rechenmitteln (3), die es gestatten, den Wert der akustischen Doppelbrechungsparameter $\theta_i$ und $\phi_i$ durch Auflösung einer Kombination von Gleichungen zu ermitteln, die die vorgenannten Doppelbrechungsparameter $\theta_i$ und $\phi_i$ für verschiedene Sendefrequenzwerte verbinden.

12. Vorrichtung gemäss dem Anspruch 11, dadurch gekennzeichnet, dass die besagten Mittel (1) zur Erzeugung einer frequenzgeregelten Schallwelle, die geradlinig auf eine der Bezugsrichtungen polarisiert ist, folgendes umfassen:

- frequenzgesteuerte Frequenzaufbereitungsmittel (10), die ein sinusförmiges Erregungssignal liefern, dessen Frequenz derjenigen der Schallwelle mit der Frequenz $f_k$ entspricht,
- mehrspurige Multiplexermittel (11), die das besagte Erregungssignal über einen einstellbaren Leistungsverstärker (102) empfangen,
- eine Vielzahl (120, 121) von elektro-akustischen Transduktoren, zur Sendung der Impulse der besagten Schallwelle und zum Empfang der besagten Impulsechos.

13. Vorrichtung gemäss dem Anspruch 11, dadurch gekennzeichnet, dass die besagten Erfassungs- und Messmittel, im Verhältnis zu einem Bezugszeitpunkt gegenüber den besagten Impulsen der Verzogerungszeiten, bei rückgestrahltem Empfang der Echoimpulse, die von den besagten einfallenden Impulsen erzeugt werden, folgende Mittel umfassen:

- Mittel (20) zum schnellen Sampling von Sendeimpulsen und gesendeten Echoimpulsen, die jeweils von den besagten Transduktoren empfangen werden,
- Mittel (21) zur Digitalisierung und zur Speicherung von Stichprobenwerten der Sende- und Echoimpulse,
- Steuermittel (22) zur Ablaufsteuerung der Sendung der besagten Sendeimpulse, zum Empfang der besagten Echoimpulse und für ihr jeweiliges Sampling, zur Speicherung der entsprechenden Stichprobenwerte.

14. Vorrichtung gemäss den Ansprüchen 11 und 13, dadurch gekennzeichnet, dass es die besagten Rechenmittel (3), die es gestatten, den Wert der akustischen Doppelbrechungsparameter $\theta_i$ und $\phi_i$ durch Auflösung einer Kombination von Gleichungen zu ermitteln, die die Doppelbrechungsparameter $\theta_i$ und $\phi_i$ für verschiedene Folgesteuerungswerte verbinden, aus einem Mikrocomputer (30) mit seinen Peripheriegeräten bestehen, der über eine parallele Schnittstellenschaltung (31) angeschlossen ist.

15. Vorrichtung gemäss dem Anspruch 14, dadurch gekennzeichnet, dass der besagte Mikrocomputer (30) mit einem Mikroprozessor ausgestattet ist, dessen Arbeitsspeicher ein Programm vom Typ "Menü" enthält, der es über einen interaktiven Dialog mit dem Bediener gestattet, das Verfahren gemäss einem

20

der Ansprüche 1 oder 2 oder 8 oder 9 zu lenken, wobei der Bediener vorher zur eigentlichen Steuerung des Verfahrens aufgefordert wird, d.h.:

- zur Bestimmung des Wertes des Frequenzbereichs der Schallwelle entsprechend der Bandbreite der Sende/Empfangstransduktoren und/oder der Beschaffenheit des zu analysierenden Werkstoffs,
- zur Bestimmung der Dauer der Modulationsimpulse zwischen 10 und 20 Mal der Dauer der Periode der Schallwelle mit der Frequenz $f_k$,
- zur Bestimmung der Impulsfolgeperiode zwischen 350 und 550 $\mu$s,
- zur Bestimmung für den laufenden Versuch, der Verwendung oder Nichtverwendung eines akustisch isotropen Pufferelements (T).

16. Vorrichtung gemäss dem Anspruch 15, dadurch gekennzeichnet, dass das besagte "Menü"-Programm ein Unterprogramm zur Berechnung der Verzögerungszeiten beim Empfang der Echoimpulse entsprechend den Ansprüchen 3 oder 4 aufweist.

17. Vorrichtung gemäss einem der Ansprüche 15 oder 16, dadurch gekennzeichnet, dass das besagte "Menü"-Programm ein Unterprogramm zur Ermittlung des Näherungswerts der Phasenverschiebung $\phi_i$, ausgehend von den Werten des Parameters mc, der für verschiedene Frequenzen der Schallwellen $f_k$ innerhalb des betrachteten Frequenzbereichs gespeichert wurde, verfügt, wobei der Parameter mc die Gleichung:

$$mc = Sin2\theta_i \times Sin\phi_i$$

bestätigt, und in der der Ausdruck $Sin2\theta_i$ für den analysierten Prüfling als eine Konstante betrachtet wird.

FIG-1

FIG-2a

FIG-2b

FIG-2c

FIG_3

Ecran graphique

30

Micro ordinateur

Clavier

3

Interface parallèle 32 bits — 31

Cde de fréquence

100

Synthétiseur (1.5 à 3 MHz) x4 — 10

Diviseur par 4 — 101

Cde de gain

Amplificateur de puissance à gain variable — 102

Lecture de données

Logique de coordination — 22

Multiplexeur 2 voies — 11

Adresse

Déclenchement — 200

Sonde de mesure

Mémoire RAM rapide 2K × 8 -35ns — 21

Data

W

Convertisseur FLASH 8 bits 20MHz — 20

121 (Py)

yi

120 (Px)

xi

2

1

EP 0 297 983 B1

FIG_4